(19) **Europäisches Patentamt**
**European Patent Office**
**Office européen des brevets**

(11) **EP 1 716 402 B1**

(12) **EUROPÄISCHE PATENTSCHRIFT**

(45) Veröffentlichungstag und Bekanntmachung des Hinweises auf die Patenterteilung:
**07.11.2007 Patentblatt 2007/45**

(21) Anmeldenummer: **05707376.9**

(22) Anmeldetag: **14.02.2005**

(51) Int Cl.:
*G01M 13/00* (2006.01)    *G01N 27/00* (2006.01)

(86) Internationale Anmeldenummer:
**PCT/EP2005/001469**

(87) Internationale Veröffentlichungsnummer:
**WO 2005/080937 (01.09.2005 Gazette 2005/35)**

(54) **ZERSTÖRUNGFREIE ÜBERWACHUNG MIKROSTRUKTURELLER VERÄNDERUNGEN EINES BAUTEILS ( SCHICHTSYSTEM, TURBINENSCHAUFELN, BRENNKAMMERAUSKLEIDUNG ) MIT SPEZIELLEN, EINFACHEN MESSMETHODEN**

NON DESTRUCTIVE MONITORING OF MICROSTRUCTURE CHANGES OF A COMPONENT ( LAYER SYSTEM, TURBINE BLADES, LINERS OF A COMBUSTION CHAMBER )

SURVEILLANCE NON DESTRUCTIVE DE MODIFICATIONS MICROSTRUCTURELLES D' UN ELEMENT DE CONSTRUCTION ( SYSTEME DE COUCHES, AUBES DE TURBINE, GARNISSAGE DE CHAMBRE DE COMBUSTION )

(84) Benannte Vertragsstaaten:
**CH DE ES GB IT LI**

(30) Priorität: **17.02.2004 EP 04003538**

(43) Veröffentlichungstag der Anmeldung:
**02.11.2006 Patentblatt 2006/44**

(73) Patentinhaber: **Siemens Aktiengesellschaft**
**80333 Munich (DE)**

(72) Erfinder:
• **DANKERT, Michael**
**63069 Offenbach (DE)**
• **FELDHEGE, Martin**
**66740 Saarlouis (DE)**
• **IRMISCH, Stefan**
**33458 Jupiter, Florida (US)**
• **OECHSNER, Matthias**
**45481 Mülheim (DE)**
• **SCHUMANN, Eckart**
**45481 Mülheim (DE)**
• **STAMM, Werner**
**45481 Mülheim (DE)**

(56) Entgegenhaltungen:
| EP-A- 0 773 359 | WO-A-02/079774 |
| DE-A- 2 442 639 | US-A- 4 408 294 |
| US-A- 5 552 711 | US-A- 5 588 034 |
| US-B2- 6 512 379 | US-B2- 6 517 236 |

EP 1 716 402 B1

**Beschreibung**

Die Erfindung betrifft ein Verfahren zur Erfassung von mikrostrukturellen Veränderungen eines Bauteils gemäß Anspruch 1.

Bauteile, die mechanischen und/oder thermischen Belastungen ausgesetzt sind, zeigen eine Degradation ihrer mechanischen, chemischen oder thermischen Eigenschaften, weil sich ihre Mikrostruktur aufgrund der Belastungen verändert. Bauteile in Turbinen wie z.B. Gas- oder Dampfturbinen, sind sowohl mechanischen als auch thermischen Belastungen ausgesetzt. Insbesondere in der Brennkammer oder in der ersten Stufe der Turbine sind solche Bauteile als Schichtsystem ausgelegt. Dabei sind auf einem Substrat, also einer Tragstruktur, eine oder mehrere Zwischenschichten vorhanden, die das Bauteil vor Oxidation/Korrosion sowie zu hohem Wärmeeintrag schützt.

Zur Wärmedämmung wird eine keramische Schicht verwendet.

Die US 6,200,088 und die US 6,455,173 offenbaren, dass Bauteile im Betrieb überwacht werden.

Die US 6,544,665 offenbart die Versinterung einer Wärmedämmschicht.

Die US 6,553,318 B2 offenbart ein Verfahren zur schnellen und gleichzeitigen Messung von Eigenschaften von vielen Proben.

Die US 6,577,141 B2 offenbart ein kapazitives Verfahren zur Bestimmung der Dichte von Asphalt.

Die US 6,512,379 B2 offenbart eine Vorrichtung zur Überwachung des Zustands einer Wärmedämmschicht, wobei Elektrizität innerhalb der Wärmedämmschicht, wie zum Beispiel durch einen Piezo-Effekt, intrinsich erzeugt wird.

Die US 4,408,294 A offenbart eine Methode zur Detektion von Rissen, die aufgrund von Vibrationen entstehen.

Die EP 0 773 359 A1 offenbart eine Vorrichtung um Schäden in keramischen Teilen zu überwachen, bei denen zusätzlich elektrische Leiterbahnen eingebracht werden, die als Detektoren verwendet werden.

Die WO 02/079774 A2 offenbart ein Verfahren zur zerstörungsfreien Prüfung bei dem eine Wirbelstrommessmethode verwendet wird.

Die US 5,552,711 A offenbart ein Überwachungssystem, bei dem elektromagnetische Signale von Ionen erfasst werden, wobei diese Ionen von verschlissenen Bauteilen stammen.

Die US 5,588,034 A offenbart eine Vorrichtung, ein Verfahren zur Überprüfung eines Kristalls mittels Röntgenstrahlen.

Die DE 24 42 639 A-OS offenbart ein Verfahren zur Überwachung des Erosionszustandes von Gasturbinenschaufeln, bei dem ein Leitungswiderstand eines Vergleichskörpers zur Bestimmung des Erosionszustandes benutzt wird.

Die US 6,517,236 B2 offenbart ein Verfahren zur Thermografie.

Bisher musste die Mikrostruktur einiger Bauteile einer aus vielen Bauteilen bestehenden Vorrichtung zerstörend untersucht werden, um entscheiden zu können, ob die anderen, restlichen Bauteile weiter im Einsatz bleiben können.

Es ist daher Aufgabe der Erfindung dieses Problem zu überwinden.

Die Aufgabe wird gelöst durch ein Verfahren zur Erfassung der mikrostrukturellen Veränderungen eines Bauteils gemäß Anspruch 1, indem Materialparameter des Bauteils zumindest zweimal, insbesondere mehrmals mittels geeigneter Messmethoden bestimmt werden.

In den Unteransprüchen sind weitere vorteilhafte Maßnahmen und Varianten des erfindungsgemäßen Verfahrens aufgelistet. Die in den Unteransprüchen aufgelisteten Maßnahmen können in vorteilhafter Art und Weise miteinander kombiniert werden.

Bei den erfindungsgemäß verwendeten Messmethoden muss von außen in das Material Energie in Form von elektrischer Spannung, Wärme oder mechanische Energie eingebracht werden, um ein Messsignal zu erhalten. Dies steht im Gegensatz zu der US 6,512,379, bei der innerhalb der Wärmedämmschicht Elektrizität ohne äußeres Einwirken entsteht.

Im Gegensatz zu der EP 0 773 359 A1 werden keine zusätzlichen Maßnahmen getroffen, beispielsweise in Form von Leiterbahnen, um eine Messmethode durchführen zu können.

Eine Thermografie-Prüfung ist bei den Bauteilen, die in dieser Anmeldung beschrieben werden, gemäß der US 6,517,236 B2 nicht möglich, da die Bauteile nicht von einer Rückseite erwärmt werden können.

Es zeigen:

| Figur 1 | ein Schichtsystem, |
|---|---|
| Figur 2 | mikrostrukturelle Veränderungen einer Schicht oder eines Substrats eines Schichtsystems, |
| Figur 3 | Degradation eines beschichteten Substrats durch Oxidation, |
| Figur 4 | mikrostrukturelle Veränderungen eines Substrats eines Schichtsystems, |
| Figur 5, 6,7,8,9,10, 11,12,13, 14, 15 | Verschiedene beispielhafte Messanordnungen zur Bestimmung von Materialparametern eines Schichtsystems, |
| Figur 16 | einen zeitlichen Verlauf von Materialparametern, |

Figur 17                                             eine Dampfturbine,
Figur 18                                             eine Gasturbine,
Figur 19                                             eine Turbinenschaufel und
Figur 20                                             eine Brennkammer.

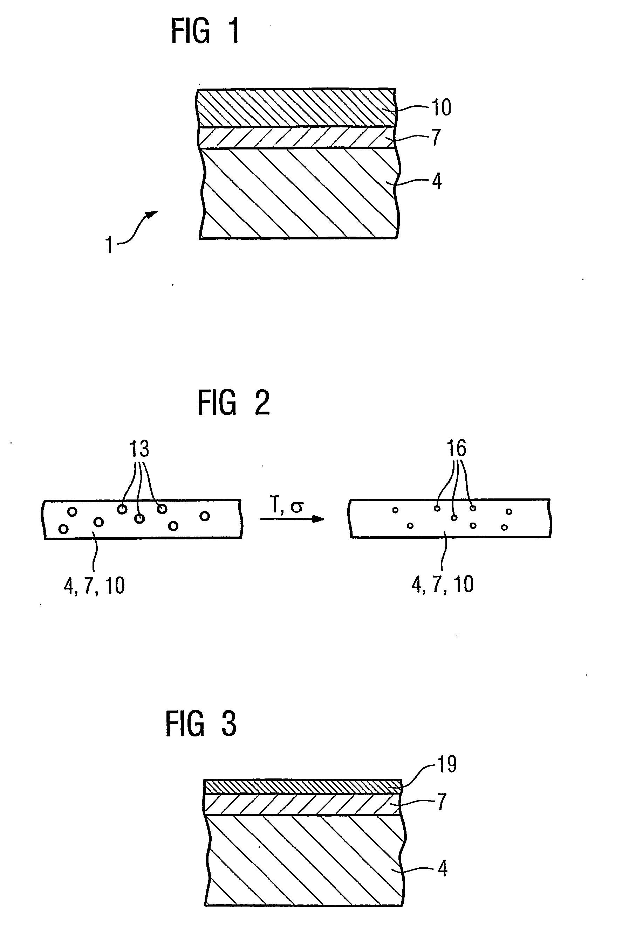

Die Figur 1 zeigt beispielhaft ein Bauteil 1, das als Schichtsystem 1 ausgebildet ist.

Das Schichtsystem 1 besteht aus einem Substrat 4, auf dem zumindest eine Schicht 7 aufgebracht ist.

Auf dieser Schicht 7, die dann eine Zwischenschicht darstellt, ist beispielsweise eine weitere äußere Schicht 10 aufgebracht.

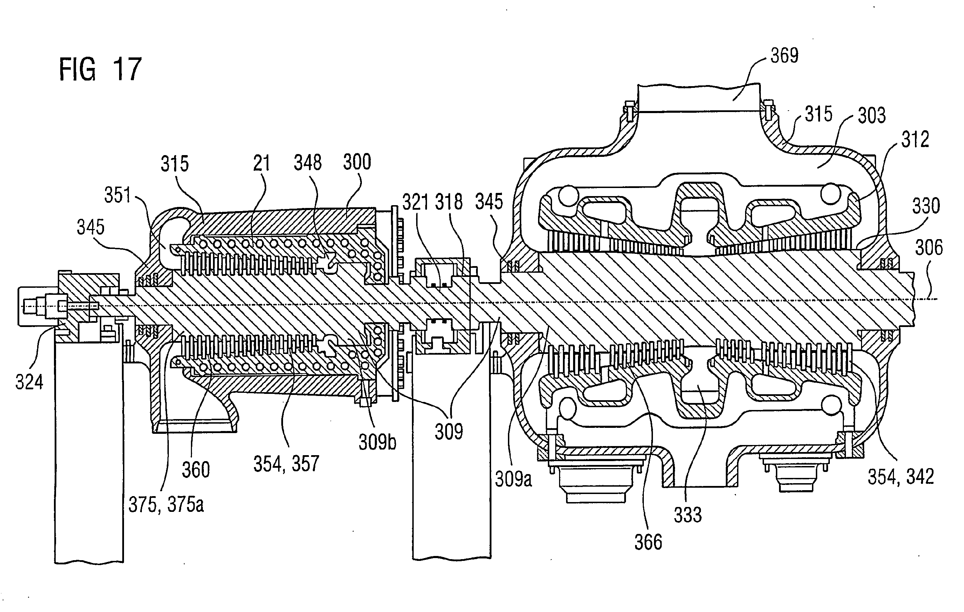

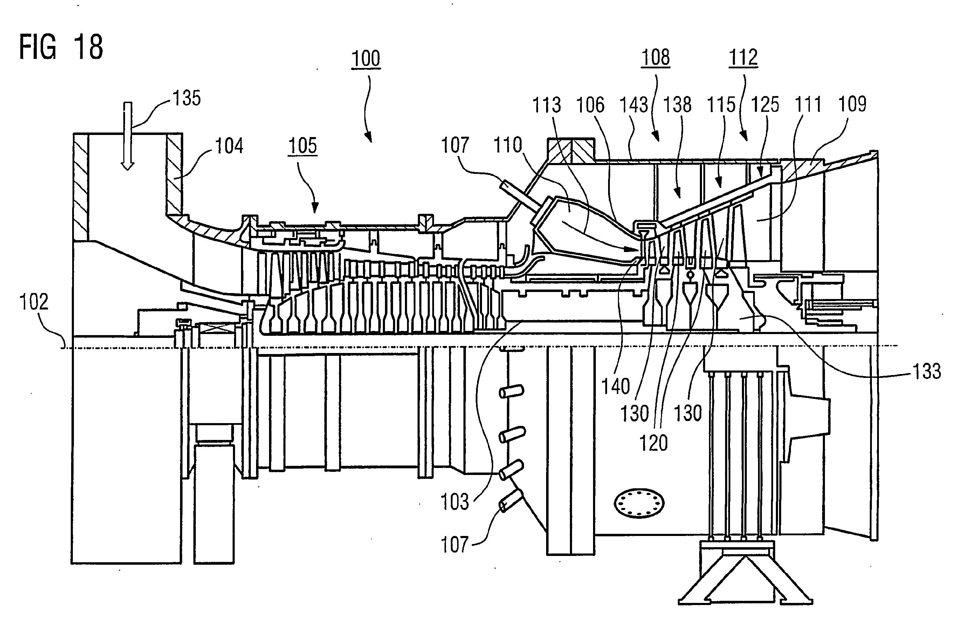

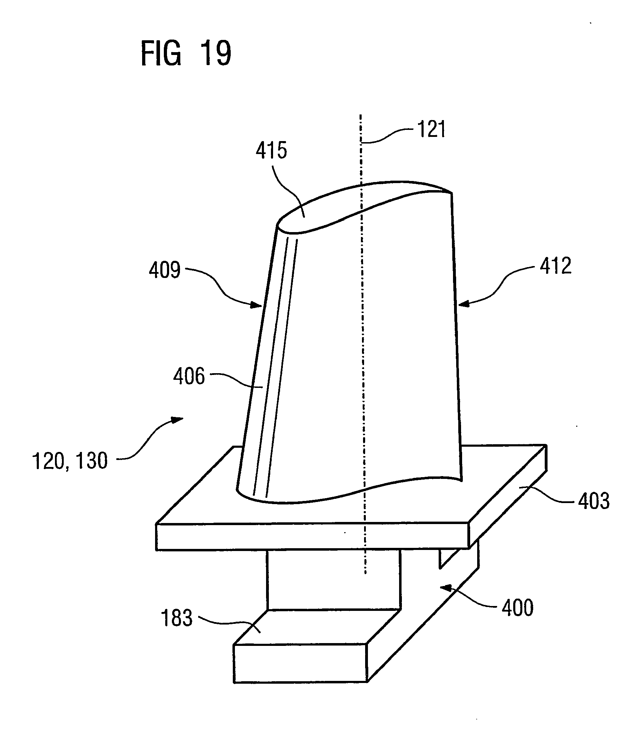

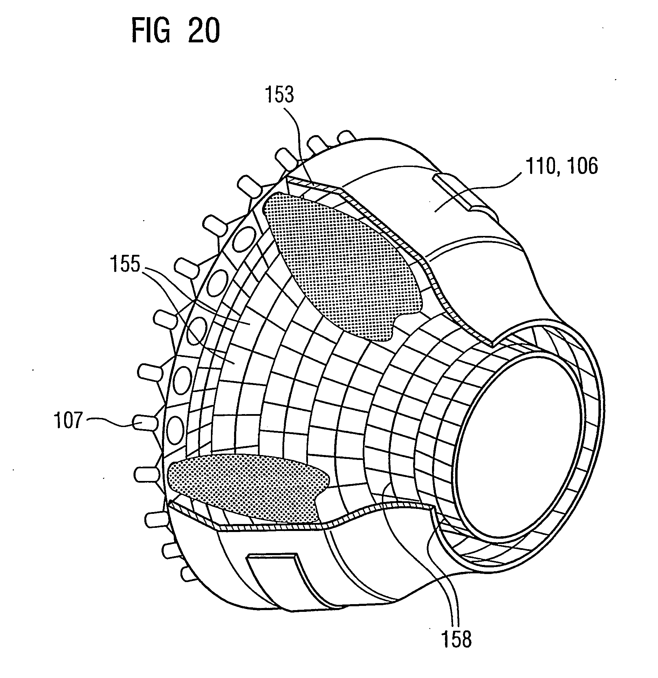

Das Substrat 4 kann metallisch oder keramisch sein. Insbesondere bei Bauteilen für Strömungsmaschinen (Flugtriebwerke, Turbinen zur Elektrizitätserzeugung, Kompressoren, wie z.B. Gas- 100 (Fig. 18) oder Dampfturbinen 300, 303 (Fig. 17)), wie z.B. Turbinenschaufeln 120, 130 (Fig. 19), Gehäuseteilen oder Brennkammerauskleidungen 155 (Fig. 20) ist das Substrat 4 metallisch und besteht vorzugsweise aus einer eisen-, kobalt- oder nickelbasierten Superlegierung.

Auf dem Substrat 4 kann eine Anbindungsschicht, insbesondere eine metallische Schicht 7, beispielsweise eine MCrAlX-Schicht vorhanden sein, wobei M für zumindest ein Element der Gruppe Eisen, Kobalt oder Nickel steht, sowie X für Yttrium, Silizium und/oder zumindest ein Element der Seltenen Erden (Aktivelemente).

Die äußere Schicht 10 kann wiederum metallisch oder keramisch sein.

Im Falle von Turbinenbauteilen 120, 130, 155 ist die äußere Schicht 10 häufig eine keramische Wärmedämmschicht.

Weitere Aufbauarten eines Schichtsystems 1 sind denkbar. Beispielsweise kann eine keramische Schicht direkt auf dem Substrat 4 aufgebracht sein. Insbesondere braucht für Bauteile, die an nicht zu heißen Stellen einer Turbine 100, 300, 303 eingesetzt werden, keine keramische Wärmedämmschicht 10 vorgesehen zu werden, so dass dann die Schicht 7 bereits die äußere Schicht darstellt.

Das erfindungsgemäße Verfahren ist ebenso anzuwenden bei einem Bauteil 1, das nur aus einem Substrat 4 besteht.

Mikrostrukturelle Veränderungen ergeben sich unter anderem durch

a) Risse,
b) Poren,
c) Phasenänderungen (Gitterstruktur),
d) Änderung der chemischen Zusammensetzung,
e) Veränderung der Ausscheidungen,
f) Spannungen (Eigenspannungen).

Figur 2 zeigt eine beispielhafte mikrostrukturelle Veränderung eines Substrats 4 und/oder einer Schicht 7, 10 eines Schichtsystems 1.

Die hier beispielhaft erwähnte keramische Wärmedämmschicht 10 soll ein gutes Thermoschockverhalten aufweisen, das insbesondere durch eine gewisse Porosität erreicht wird. Daher sind in der Schicht 10 Poren 13 vorhanden, die eine gewisse Größe haben (Fig. 2, links). Aufgrund des betrieblichen Einsatzes der Schicht 10 beispielsweise in der Turbine 100, 300, 303 erfährt die Wärmedämmschicht 10 einen Wärmeeintrag und/oder mechanische Spannungen $\sigma$. Durch den Einfluss der Temperatur T und/oder mechanische Spannungen $\sigma$ versintert die poröse Wärmedämmschicht 10, so dass aus den großen Poren 13 kleinere Poren 16 werden (Fig. 2, rechts). Durch die Verkleinerung der Poren 13 reduziert sich die Porosität, wodurch sich das Thermoschockverhalten der keramischen Wärmedämmschicht 10 verschlechtert.

Die mikrostrukturelle Veränderung, hier die Porosität, verursacht also eine Verschlechterung des Thermoschockverhaltens.

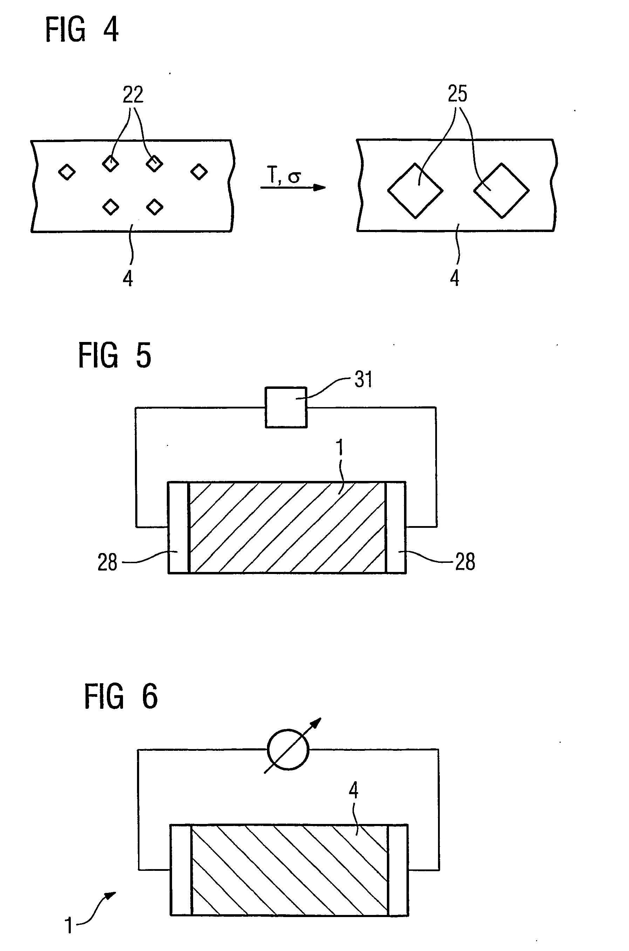

Figur 3 zeigt die mikrostrukturellen Veränderungen einer metallischen Schutzschicht 7 auf einem Substrat 4.

Auf einer Schutzschicht 7, die als Oxidations- oder Korrosionsschutzschicht dient, bildet sich beispielsweise im Fall der MCrAlX-Schichten (Fig. 18) eine Aluminiumoxidschicht 19 oder allgemeiner: eine Oxid- oder Korrosionsschicht 19. Je nach verwendeter Legierung kommt es also zu einer Verarmung eines Elements einer Legierung der Schicht 7 oder des Substrats 4, das ein Oxid- oder Korrosionsprodukt bildet. Bei der MCrAlX-Schicht 7 kommt es zur Verarmung von Aluminium in der MCrAlX-Schicht 7 unterhalb der Schicht 19.

Ebenso kann es sich bei der Schicht 7 um einen alitierten oder chromierten Bereich des Substrats 4 handeln.

Dabei wurde Aluminium und/oder Chrom auf das Substrat 4 aufgebracht und eindiffundieren gelassen.

Das Substrat 4 ist dann mit Aluminium oder Chrom angereichert. Auch hier kommt es durch Bildung von Aluminiumoxid oder Chromoxid aufgrund von Oxidation oder Korrosion zur Verarmung an Aluminium oder Chrom.

Figur 4 zeigt eine weitere mikrostrukturelle Veränderung eines Schichtsystems, insbesondere des Substrats 4.

Ein solches Substrat 4, insbesondere aus einer Superlegierung, weist Ausscheidungen 22 (γ'-Phase) auf, die die mechanischen Eigenschaften positiv beeinflussen (Fig. 4, links).

Aufgrund der Temperatur T und/oder Spannungen σ verändern sich die Ausscheidungen 22 so, dass der positive Einfluss auf die mechanischen Eigenschaften zumindest deutlich reduziert wird. Dies geschieht durch Vergrößerung der Ausscheidungen 25 (Fig. 4, rechts).

Ebenfalls können Risse im Substrat 4 und/oder in den Schichten 7, 10 vorhanden sein, die die Porosität erhöhen.

Da es keinen direkten, einzigen Parameter für die Mikrostruktur (Risse, Poren, Ausscheidungen, usw.) gibt, wird die Mikrostruktur indirekt über einen oder mehrere Materialparameter integral bestimmt, die von Rissen, Poren und Ausscheidungen usw. beeinflusst werden.

Die Messungen sind beispielsweise zerstörungsfreie Messungen.

Figur 5 zeigt eine beispielhafte Messanordnung, um einen Materialparameter des Substrats 4 und/oder der Schicht 7, 10 zu bestimmen.

Dabei werden an geeigneten Stellen des Substrats 4 oder der Schicht 7, 10 Elektroden 28 angelegt. Mittels eines Messgeräts 31 kann die elektrische Kapazität C[F] bestimmt werden.

Die Kapazitätsmessung eignet sich am besten, wenn das Substrat 4 oder die Schicht 7, 10 aus Keramik besteht, also eine hohe Dielektrizitätskonstante ε aufweist und eine Verringerung der Porosität erwartet wird.

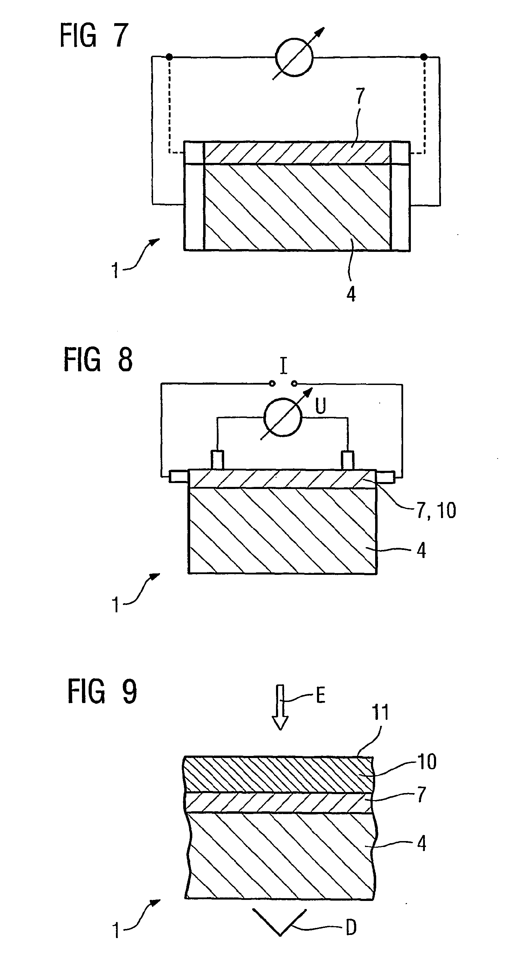

Die Materialparameter des Substrats 4 können gemessen werden, wenn die aufliegenden Schichten entfernt wurden (Fig. 6), aber auch, wenn die aufliegenden Schichten 7 noch vorhanden sind (Fig. 7).

Statt der Kapazität können auch andere elektrische Eigenschaften, die ferroelektrischen Eigenschaften und die pyroelektrischen Eigenschaften, insbesondere einer Keramik, bestimmt werden.

Figur 8 zeigt eine weitere beispielhafte Messanordnung, um einen Materialparameter einer Schicht 7, 10 zu bestimmen.

Beispielsweise durch die Verarmung des Aluminiumgehalts in der Schicht 7 (Fig. 3) verändert sich die elektrische Leitfähigkeit σ, die beispielsweise mittels einer 4-Punkt-Methode ermittelt werden kann.

Weitere Materialparameter, die gemessen werden können, um die chemische Änderung der Mikrostruktur zu erfahren, stellt hier die thermische Leitfähigkeit oder magnetische Eigenschaften dar.

Bei der 4-Punkt-Methode wird ein konstanter Strom I (Gleichstrom) an zwei Stellen der Schicht 7 oder des Substrats 4 angelegt. Der Spannungsabfall U wird an zwei zwischen den Stromkontaktierungspunkten liegenden Stellen abgegriffen. Daraus wird ein Widerstandswert $R = \dfrac{U}{I}$ ermittelt (σ ~ 1/R).

Die elektrische Leitfähigkeit kann auch mittels induktiven Widerstands (Wechselstrom) bestimmt werden.

Eine Veränderung im Gefüge kann mittels elektrischer und/oder elektromagnetischer Materialwerte ermittelt werden. Dies sind wiederum die elektrische Leitfähigkeit, ein induktiver Widerstand und/oder magnetische Eigenschaften wie die Suszeptibilität.

Figur 9 zeigt eine weitere Möglichkeit um ein Materialparameter der keramischen Wärmedämmschicht 10 zu bestimmen.

In diesem Fall wird die thermische Leitfähigkeit λ der Schicht 10 bestimmt. Dies erfolgt durch ein Laserflash-Verfahren oder durch eine Thermowellenanalyse.

Bei dem Laserflash-Verfahren wird ein kurzzeitiger Wärmeeintrag E auf der äußeren Seite 11 der Schicht 10 eingebracht. Die thermische Leitfähigkeit λ der Wärmedämmschicht 10 wird dadurch bestimmt, dass die so eingebrachte Wärme E sich nach einiger Zeit über die gesamte Probe verteilt und zur Erwärmung der Probenrückseite sowie der Zwischenschicht 7 des Substrats 4 führt. Durch den zeitlichen Verlauf wird die Temperaturleitfähigkeit λ bestimmt. Die Erwärmung wird mit einem Infrarot-Detektor D oder einem Pyrometer D gemessen.

Vorab kann die Schichtdicke der Schicht 10 bestimmt werden (Wirbelstromverfahren), da sich im Einsatz die Schichtdicke der Schicht 10 durch Erosion verändern kann. Die gegebenenfalls verminderte Schichtdicke wird in die Berechnung der thermischen Leitfähigkeit mit einbezogen.

Durch die Veränderung der chemischen Zusammensetzung der Zwischenschutzschicht 7 wird auch der zeitliche Verlauf der Erwärmung verändert, da sich in diesem Fall auch die thermische Leitfähigkeit der Zwischenschutzschicht 7 verändert hat.

Bei der Thermowellenanalyse wird die zu untersuchende Probe mit einem intensitätsmodulierten Lichtstrahl, in der Regel einem Laserstrahl beaufschlagt. Durch die Absorption dieser Strahlung mit der Intensität I in der Probenoberfläche erzeugt die in Wärme dissipierende Energie des elektromagnetischen Feldes ein zeitlich abhängiges Temperaturfeld T, welches aus einem zeitlich konstanten Temperaturfeld und einem zeitlich modulierten Temperaturfeld besteht. Dieser zeitlich veränderliche Temperaturfeldanteil wird als thermische Welle bezeichnet. Charakteristisch für die thermische Welle ist die Modulationsfrequenz W und ihre Phasenverschiebung F, mit der die thermische Welle ihrer Anregung folgt. Sie ergibt sich als Lösung der inhomogenen Wärmeleitungsgleichung.

Die Ausbreitung dieser gedämpften thermischen Welle ist von den zu messenden Probeneigenschaften abhängig, wie z.B. thermische Wärmeleitfähigkeit.

Durch Vergleichsmessungen an einem Schichtverbund aus Wärmedämmschicht 10 und Zwischenschutzschicht 7 kann eine Veränderung der Mikrostrukturen beider Schichten 7, 10 erfasst werden.

Auch die spezifische Wärmekapazität kann als Materialparameter bestimmt werden.

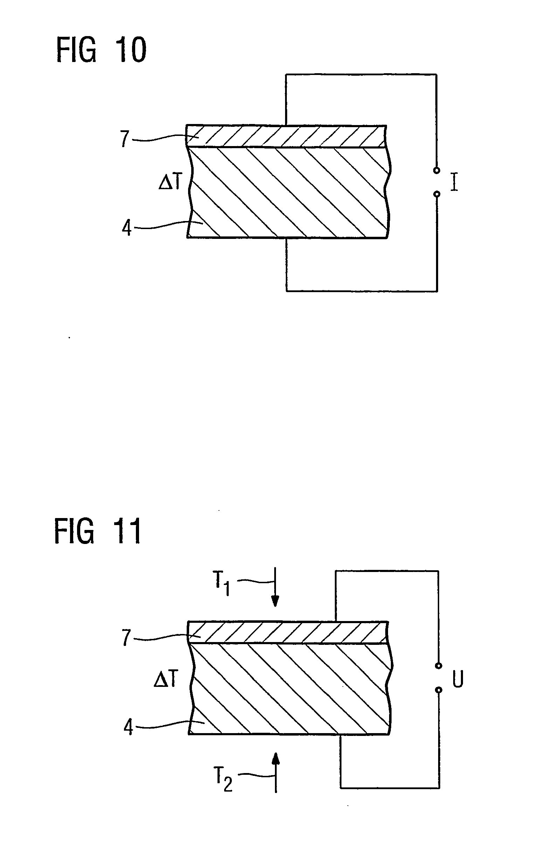

Ebenso kann der Peltier-Effekt ausgenutzt werden, um die Materialveränderungen zu erfassen. Beim Peltier-Effekt fließt ein elektrischer Strom I durch die metallische Schicht 7 und das metallische Substrat 4, wodurch ein Temperaturunterschied $\Delta T$ zwischen Substrat 4 und Schicht 7 erzeugt wird (Fig. 10). Der Temperaturunterschied $\Delta T$ ist abhängig von den Materialien des Substrats 4 und der Schicht 7.

Ebenso kann die Umkehrung, der Seebeck-Effekt, ausgenutzt werden (Fig. 11).

Hier wird durch einen Temperaturunterschied $\Delta T = T_1 - T_2$ eine elektrische Spannung U erzeugt. Der Temperaturunterschied $\Delta T$ ist während des Betriebs von Substrat 4 und Schicht 7 vorhanden und kann gemessen werden.

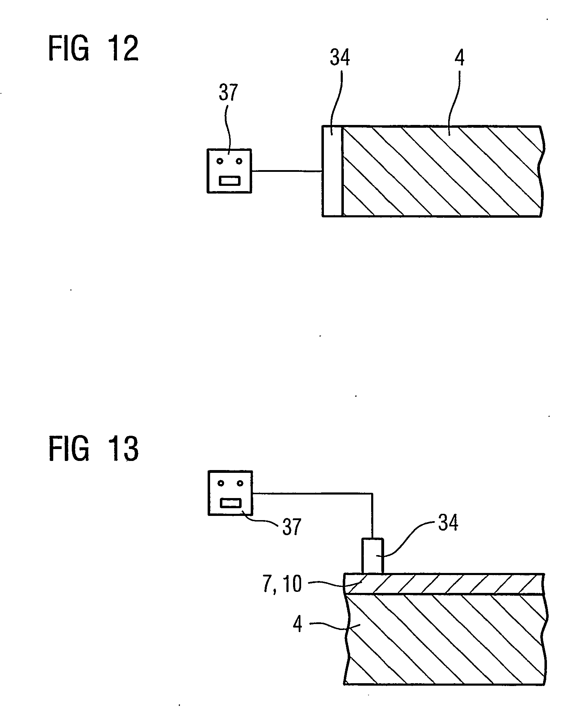

Figuren 12, 13 zeigen weitere Anordnungen, um Materialparameter zu bestimmen.

An das Substrat 4 (Fig. 12) und/oder an die Schicht 7, 10 (Fig. 13) wird eine Ultraschallsonde 34 angelegt, um die Schallgeschwindigkeit in dem Material zu bestimmen. Die Schallgeschwindigkeit hängt vom mechanischen E-Modul und der Dichte ab.

Die Bestimmung der Schallgeschwindigkeit in dem Substrat 4 kann mit oder ohne aufliegende Schichten 7, 10 durchgeführt werden.

Ebenso kann die Schallgeschwindigkeit in den Schichten 7, 10, die auf dem Substrat 4 aufliegen, bestimmt werden.

Ebenso kann die Schallgeschwindigkeit durch die Schichten 7, 10 und das Substrat 4 hindurch gemessen werden.

Da die Schallgeschwindigkeit vom E-Modul und der Dichte abhängt, wird die Schallgeschwindigkeit durch eine Veränderung der Porosität, Entstehung von Rissen, Phasenveränderung und/oder Ausscheidungen bestimmt.

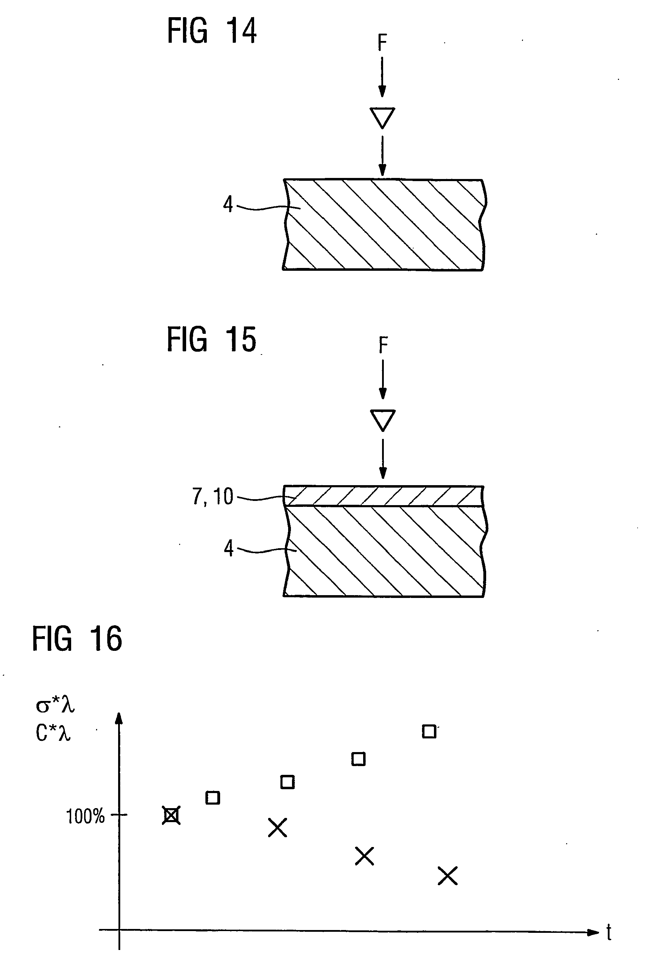

Figur 14 zeigt eine weitere Anordnung um einen Materialparameter zu bestimmen.

Hier wird mittels eines Mikroindenters die Eindringtiefe in das Substrat 4 (Fig. 14) oder die Schichten 7, 10 (Fig. 15) bestimmt.

Dabei wird mit einer bestimmten vorgegebenen Kraft F der Mikroindenter für eine bestimmte Zeit auf die Oberfläche des Substrats 4 oder der Schicht 7, 10 einwirken gelassen. Die Größe des Eindrucks hängt vom E-Modul des Materials des Substrats 4 oder der Schicht 7, 10 ab.

Der E-Modul ist wiederum bestimmt durch eine veränderte Porosität und/oder Veränderung von Ausscheidungen.

Figur 16 zeigt einen beispielhaften zeitlichen Verlauf mehrerer Materialparameter, die in verschiedenen zeitlichen Abständen gemessen werden.

Ein Materialparameter kann mit der Zeit kontinuierlich oder diskontinuierlich abfallen (Fig. 16: X) oder zunehmen (Fig. 16: ), weil der Materialparameter verglichen mit dem Anfangszustand zu- oder abgenommen hat.

Der Anfangswert bei t = 0 vor der ersten Benutzung ist auf 100% normiert, wobei t= 0 dem Beginn des ersten Einsatzes gleichgesetzt wird, wenn die Messung beispielsweise vor dem Einbau des Bauteils 1 erfolgte.

Alle folgenden Werte des oder der Materialparameter des Bauteils 1, nachdem es im Einsatz war, werden im zeitlichen Abstand mit dem Anfangswert verglichen.

Statt einem Parameter können auch zwei oder mehr Parameter bestimmt werden, die beispielsweise als Produkt oder Quotient, also z.B. Kapazität mal thermische Leitfähigkeit $\lambda$ (Fig. 16, C*$\lambda$) oder elektrische Leitfähigkeit mal thermische Leitfähigkeit (Fig. 16, $\sigma$*$\lambda$) aufgetragen werden.

Die Produktbildung eignet sich, wenn die Materialparameter sich in ähnlicher Weise mit der Zeit entwickeln, also entweder zu- oder abnehmen. Bei gegenläufiger zeitlicher Entwicklung ist die Quotientenbildung sinnvoll.

Ähnliche Verläufe wie in Figur 16 dargestellt ergeben sich auch für den zeitlichen Verlauf eines einzelnen Parameters.

Anhand von vorher ermittelten Kalibrierungskurven kann anhand der Änderung des Materialparameters eine mikrostrukturelle Veränderung in Abhängigkeit von der Zeit erfasst werden.

Mittels Vergleichsproben oder mittels neu hergestellter Bauteile, die eine noch nicht degradierte Mikrostruktur aufweisen, und Vergleichsproben oder Bauteilen, die im Einsatz waren und eine degradierte Mikrostruktur darstellen, bei denen ein Austausch oder eine Erneuerung des Bauteils angebracht ist, wird ein Zeitpunkt festgelegt, wann ein reales Bauteil überprüft oder wiederaufgearbeitet werden soll oder das Ende seiner Lebenszeitdauer erreicht hat. Die Vergleichsproben können auch reale Bauteile 1 sein.

Die zumindest zweite oder folgende Messungen erfolgen im zeitlichen Abstand von der ersten Messung nach oder während des ersten Betriebseinsatzes. Die Messung der Materialparameter kann online und automatisiert erfolgen. So kann jeder Zeit der mikrostrukturelle Zustand der Bauteile 1 kontrolliert werden.

Ab einem bestimmten Prozentsatz der Veränderung, d.h. nach einer bestimmten Zeitdauer nach t =0 kann festgelegt werden, ab wann ein Bauteil 1 wieder aufgearbeitet werden sollte oder ein kompletter Austausch erfolgen muss. So ist es z. B. sinnvoll, eine Wartung vorzusehen, wenn erkennbar ist, dass eine Wiederaufarbeitung von Bauteilen 1 noch möglich ist, aber eine Hinausschiebung der Wartung eine Wiederaufarbeitung weniger rentabel erscheinen lässt.

Die Messung der Materialparameter kann während des Einsatzes des Bauteils 1 erfolgen.

Wenn dies nicht möglich ist, kann die Messung auch erfolgen, wenn das Bauteil 1, beispielsweise eine Turbinenschaufel 120, 130, noch in einer nicht im Betrieb befindlichen Vorrichtung, beispielsweise einer Turbine 100, 300, 303 eingebaut ist.

In Figur 17 ist beispielhaft eine Dampfturbine 300, 303 mit einer sich entlang einer Rotationsachse 306 erstreckenden Turbinenwelle 309 dargestellt.

Die Dampfturbine weist eine Hochdruck-Teilturbine 300 und eine Mitteldruck-Teilturbine 303 mit jeweils einem Innengehäuse 312 und einem dieses umschließendes Außengehäuse 315 auf. Die Hochdruck-Teilturbine 300 ist beispielsweise in Topfbauart ausgeführt. Die Mitteldruck-Teilturbine 303 ist zweiflutig ausgeführt. Es ist ebenfalls möglich, dass die Mitteldruck-Teilturbine 303 einflutig ausgeführt ist. Entlang der Rotationsachse 306 ist zwischen der Hochdruck-Teilturbine 300 und der Mitteldruck-Teilturbine 303 ein Lager 318 angeordnet, wobei die Turbinenwelle 309 in dem Lager 318 einen Lagerbereich 321 aufweist. Die Turbinenwelle 309 ist auf einem weiteren Lager 324 neben der Hochdruck-Teilturbine 300 aufgelagert. Im Bereich dieses Lagers 324 weist die Hochdruck-Teilturbine 300 eine Wellendichtung 345 auf. Die Turbinenwelle 309 ist gegenüber dem Außengehäuse 315 der Mitteldruck-Teilturbine 303 durch zwei weitere Wellendichtungen 345 abgedichtet. Zwischen einem Hochdruck-Dampfeinströmbereich 348 und einem Dampfaustrittsbereich 351 weist die Turbinenwelle 309 in der Hochdruck-Teilturbine 300 die Hochdruck-Laufbeschaufelung 354, 357 auf. Diese Hochdruck-Laufbeschaufelung 354, 357 stellt mit den zugehörigen, nicht näher dargestellten Laufschaufeln einen ersten Beschaufelungsbereich 360 dar. Die Mitteldruck-Teilturbine 303 weist einen zentralen Dampfeinströmbereich 333 auf. Dem Dampfeinströmbereich 333 zugeordnet weist die Turbinenwelle 309 eine radialsymmetrische Wellenabschirmung 363, eine Abdeckplatte, einerseits zur Teilung des Dampfstromes in die beiden Fluten der Mitteldruck-Teilturbine 303 sowie zur Verhinderung eines direkten Kontaktes des heißen Dampfes mit der Turbinenwelle 309 auf. Die Turbinenwelle 309 weist in der Mitteldruck-Teilturbine 303 einen zweiten Beschaufelungsbereich 366 mit den Mitteldruck-Laufschaufeln 354, 342 auf. Der durch den zweiten Beschaufelungsbereich 366 strömende heiße Dampf strömt aus der Mitteldruck-Teilturbine 303 aus einem Abströmstutzen 369 zu einer strömungstechnisch nachgeschalteten, nicht dargestellten Niederdruck-Teilturbine.

Die Turbinenwelle 309 ist aus zwei Teilturbinenwellen 309a und 309b zusammengesetzt, die im Bereich des Lagers 318 fest miteinander verbunden sind.

Die Figur 18 zeigt beispielhaft eine Gasturbine 100 in einem Längsteilschnitt.

Die Gasturbine 100 weist im Inneren einen um eine Rotationsachse 102 drehgelagerten Rotor 103 auf, der auch als Turbinenläufer bezeichnet wird.

Entlang des Rotors 103 folgen aufeinander ein Ansauggehäuse 104, ein Verdichter 105, eine beispielsweise torusartige Brennkammer 110, insbesondere Ringbrennkammer 106, mit mehreren koaxial angeordneten Brennern 107, eine Turbine 108 und das Abgasgehäuse 109.

Die Ringbrennkammer 106 kommuniziert mit einem beispielsweise ringförmigen Heißgaskanal 111. Dort bilden beispielsweise vier hintereinandergeschaltete Turbinenstufen 112 die Turbine 108.

Jede Turbinenstufe 112 ist aus zwei Schaufelringen gebildet. In Strömungsrichtung eines Arbeitsmediums 113 gesehen folgt im Heißgaskanal 111 einer Leitschaufelreihe 115 eine aus Laufschaufeln 120 gebildete Reihe 125.

Die Leitschaufeln 130 sind dabei an einem Innengehäuse 138 eines Stators 143 befestigt, wohingegen die Laufschaufeln 120 einer Reihe 125 beispielsweise mittels einer Turbinenscheibe 133 am Rotor 103 angebracht sind. An dem Rotor 103 angekoppelt ist ein Generator oder eine Arbeitsmaschine (nicht dargestellt).

Während des Betriebes der Gasturbine 100 wird vom Verdichter 105 durch das Ansauggehäuse 104 Luft 135 angesaugt und verdichtet. Die am turbinenseitigen Ende des Verdichters 105 bereitgestellte verdichtete Luft wird zu den Brennern 107 geführt und dort mit einem Brennmittel vermischt. Das Gemisch wird dann unter Bildung des Arbeitsmediums 113 in der Brennkammer 110 verbrannt.

Von dort aus strömt das Arbeitsmedium 113 entlang des Heißgaskanals 111 vorbei an den Leitschaufeln 130 und den Laufschaufeln 120. An den Laufschaufeln 120 entspannt sich das Arbeitsmedium 113 impulsübertragend, so dass die Laufschaufeln 120 den Rotor 103 antreiben und dieser die an ihn angekoppelte Arbeitsmaschine.

Die dem heißen Arbeitsmedium 113 ausgesetzten Bauteile unterliegen während des Betriebes der Gasturbine 100 thermischen Belastungen. Die Leitschaufeln 130 und Laufschaufeln 120 der in Strömungsrichtung des Arbeitsmediums 113 gesehen ersten Turbinenstufe 112 werden neben den die Ringbrennkammer 106 auskleidenden Hitzeschildsteinen am meisten thermisch belastet.

Um den dort herrschenden Temperaturen standzuhalten, werden diese mittels eines Kühlmittels gekühlt.

Ebenso können die Substrate eine gerichtete Struktur aufweisen, d.h. sie sind einkristallin (SX-Struktur) oder weisen nur längsgerichtete Körner auf (DS-Struktur).

Als Material werden eisen-, nickel- oder kobaltbasierte Superlegierungen verwendet.

Beispielsweise werden Superlegierungen verwendet, wie sie aus der EP 1204776, EP 1306454, EP 1319729, WO 99/67435 oder WO 00/44949 bekannt sind.

Ebenso können die Schaufeln 120, 130 Beschichtungen gegen Korrosion (MCrAlX; M ist zumindest ein Element der Gruppe Eisen (Fe), Kobalt (Co), Nickel (Ni), X steht für Yttrium (Y) und/oder zumindest ein Element der Seltenen Erden) und Wärme durch eine Wärmedämmschicht aufweisen. Die Wärmedämmschicht besteht beispielsweise $ZrO_2$, $Y_2O_4$-$ZrO_2$, d.h. sie ist nicht, teilweise oder vollständig stabilisiert durch Yttriumoxid und/oder Kalziumoxid und/oder Magnesiumoxid.

Durch geeignete Beschichtungsverfahren wie z.B. Elektronenstrahlverdampfen (EB-PVD) werden stängelförmige Körner in der Wärmedämmschicht erzeugt.

Die Leitschaufel 130 weist einen dem Innengehäuse 138 der Turbine 108 zugewandten Leitschaufelfuß (hier nicht dargestellt) und einen dem Leitschaufelfuß gegenüberliegenden Leitschaufelkopf auf. Der Leitschaufelkopf ist dem Rotor 103 zugewandt und an einem Befestigungsring 140 des Stators 143 festgelegt.

Figur 19 zeigt in perspektivischer Ansicht eine Schaufel 120, 130, die sich entlang einer Längsachse 121 erstreckt.

Die Schaufel 120 kann eine Laufschaufel 120 oder Leitschaufel 130 einer Strömungsmaschine sein. Die Strömungsmaschine kann eine Gasturbine eines Flugzeugs oder eines Kraftwerks zur Elektrizitätserzeugung, eine Dampfturbine oder ein Kompressor sein.

Die Schaufel 120, 130 weist entlang der Längsachse 121 aufeinander folgend einen Befestigungsbereich 400, eine daran angrenzende Schaufelplattform 403 sowie ein Schaufelblatt 406 auf.

Als Leitschaufel 130 kann die Schaufel an ihrer Schaufelspitze 415 eine weitere Plattform aufweisen (nicht dargestellt).

Im Befestigungsbereich 400 ist ein Schaufelfuß 183 gebildet, der zur Befestigung der Laufschaufeln 120, 130 an einer Welle oder einer Scheibe dient (nicht dargestellt).

Der Schaufelfuß 183 ist beispielsweise als Hammerkopf ausgestaltet. Andere Ausgestaltungen als Tannenbaum- oder Schwalbenschwanzfuß sind möglich.

Die Schaufel 120, 130 weist für ein Medium, das an dem Schaufelblatt 406 vorbeiströmt, eine Anströmkante 409 und eine Abströmkante 412 auf.

Bei herkömmlichen Schaufeln 120, 130 werden in allen Bereichen 400, 403, 406 der Schaufel 120, 130 beispielsweise massive metallische Werkstoffe verwendet.

Die Schaufel 120, 130 kann hierbei durch ein Gussverfahren, auch mittels gerichteter Erstarrung, durch ein Schmiedeverfahren, durch ein Fräsverfahren oder Kombinationen daraus gefertigt sein.

Werkstücke mit einkristalliner Struktur oder Strukturen werden als Bauteile für Maschinen eingesetzt, die im Betrieb hohen mechanischen, thermischen und/oder chemischen Belastungen ausgesetzt sind.

Die Fertigung von derartigen einkristallinen Werkstücken erfolgt z.B. durch gerichtetes Erstarren aus der Schmelze. Es handelt sich dabei um Gießverfahren, bei denen die flüssige metallische Legierung zur einkristallinen Struktur, d.h. zum einkristallinen Werkstück, oder gerichtet erstarrt.

Dabei werden dendritische Kristalle entlang dem Wärmefluss ausgerichtet und bilden entweder eine stängelkristalline Kornstruktur (kolumnar, d.h. Körner, die über die ganze Länge des Werkstückes verlaufen und hier, dem allgemeinen Sprachgebrauch nach, als gerichtet erstarrt bezeichnet werden) oder eine einkristalline Struktur, d.h. das ganze Werkstück besteht aus einem einzigen Kristall. In diesen Verfahren muss man den Übergang zur globulitischen (polykristallinen) Erstarrung meiden, da sich durch ungerichtetes Wachstum notwendigerweise transversale und longitudinale Korngrenzen ausbilden, welche die guten Eigenschaften des gerichtet erstarrten oder einkristallinen Bauteiles zunichte machen.

Ist allgemein von gerichtet erstarrten Gefügen die Rede, so sind damit sowohl Einkristalle gemeint, die keine Korngrenzen oder höchstens Kleinwinkelkorngrenzen aufweisen, als auch Stängelkristallstrukturen, die wohl in longitudinaler Richtung verlaufende Korngrenzen, aber keine transversalen Korngrenzen aufweisen. Bei diesen zweitgenannten kristallinen Strukturen spricht man auch von gerichtet erstarrten Gefügen (directionally solidified structures).

Solche Verfahren sind aus der US-PS 6,024,792 und der EP 0 892 090 A1 bekannt.

Wiederaufarbeitung (Refurbishment) bedeutet, dass Bauteile 120, 130 nach ihrem Einsatz gegebenenfalls von Schutzschichten befreit werden müssen (z.B. durch Sandstrahlen). Danach erfolgt eine Entfernung der Korrosions- und/oder Oxidationsschichten bzw. -produkte. Gegebenenfalls werden auch noch Risse im Bauteil 120, 130 repariert. Danach erfolgt eine Wiederbeschichtung des Bauteils 120, 130 und ein erneuter Einsatz des Bauteils 120, 130.

Die Schaufel 120, 130 kann hohl oder massiv ausgeführt sein. Wenn die Schaufel 120, 130 gekühlt werden soll, ist sie hohl und weist ggf. noch Filmkühllöcher (nicht dargestellt) auf. Als Schutz gegen Korrosion weist die Schaufel 120, 130 beispielsweise entsprechende meistens metallische Beschichtungen auf und als Schutz gegen Wärme meistens noch eine keramische Beschichtung.

Die Figur 20 zeigt eine Brennkammer 110 einer Gasturbine.

Die Brennkammer 110 ist beispielsweise als so genannte Ringbrennkammer ausgestaltet, bei der eine Vielzahl von in Umfangsrichtung um die Turbinenwelle 103 herum angeordneten Brennern 102 in einen gemeinsamen Brennkammerraum münden. Dazu ist die Brennkammer 110 in ihrer Gesamtheit als ringförmige Struktur ausgestaltet, die um die Turbinenwelle 103 herum positioniert ist.

Zur Erzielung eines vergleichsweise hohen Wirkungsgrades ist die Brennkammer 110 für eine vergleichsweise hohe Temperatur des Arbeitsmediums M von etwa 1000°C bis 1600°C ausgelegt. Um auch bei diesen, für die Materialien ungünstigen Betriebsparametern eine vergleichsweise lange Betriebsdauer zu ermöglichen, ist die Brennkammerwand 153 auf ihrer dem Arbeitsmedium M zugewandten Seite mit einer aus Hitzeschildelementen 155 gebildeten Innenauskleidung versehen. Jedes Hitzeschildelement 155 ist arbeitsmediumsseitig mit einer besonders hitzebeständigen Schutzschicht ausgestattet oder aus hochtemperaturbeständigem Material gefertigt. Aufgrund der hohen Temperaturen im Inneren der Brennkammer 110 ist zudem für die Hitzeschildelemente 155 bzw. für deren Halteelemente ein Kühlsystem vorgesehen.

Die Materialien der Brennkammerwand und deren Beschichtungen können ähnlich der Turbinenschaufeln sein.

Die Brennkammer 110 ist insbesondere für eine Detektion von Verlusten der Hitzeschildelemente 155 ausgelegt. Dazu sind zwischen der Brennkammerwand 153 und den Hitzeschildelementen 155 eine Anzahl von Temperatursensoren 158 positioniert.

**Patentansprüche**

1.  Verfahren zur Erfassung von mikrostrukturellen Veränderungen eines Bauteils (1),

    insbesondere eines Schichtsystems (1),

    durch zumindest zweimalige, insbesondere mehrmalige Messung von zumindest einem Materialparameter des Bauteils (1),

    wobei eine Messmethode zur Bestimmung eines Materialparameters, ausgewählt aus der Gruppe elektrische Kapazität, thermische Leitfähigkeit, spezifische Wärmekapazität, Peltierkoeffezient, magnetische Suszeptibilität, Ferroelektrizität, Pyroelektrizität, Ultraschall oder mechanischer Indentertest,

    verwendet wird.

2.  Verfahren nach Anspruch 1,
    **dadurch gekennzeichnet, dass**
    die erste Messung des zumindest einen Materialparameters an einem neu hergestellten Bauteil (1) durchgeführt wird.

3.  Verfahren nach Anspruch 1 oder 2,
    **dadurch gekennzeichnet, dass**
    die erste Messung vor dem ersten Betriebseinsatz des Bauteils durchgeführt wird.

4.  Verfahren nach Anspruch 1, 2 oder 3,
    **dadurch gekennzeichnet, dass**
    die zumindest zweite Messung im zeitlichen Abstand von der ersten Messung nach oder während des ersten Betriebseinsatzes erfolgt.

5.  Verfahren nach Anspruch 1, 2, 3 oder 4,
    **dadurch gekennzeichnet, dass**
    das Verfahren eine zerstörungsfreie Messmethode beinhaltet.

6.  Verfahren nach Anspruch 1,
    **dadurch gekennzeichnet, dass**
    das Verfahren mit einem Schichtsystem (1) durchgeführt wird,
    das aus einem Substrat (4) und zumindest einer Schicht (7, 10) besteht.

7.  Verfahren nach Anspruch 1 oder 6,
    **dadurch gekennzeichnet, dass**
    das Verfahren mit einem Schichtsystem (1) durchgeführt wird,
    das aus einem Substrat (4), zumindest einer ersten Schicht (7) und einer äußeren Schicht (10) besteht.

8.  Verfahren nach Anspruch 6 bis 7,
    **dadurch gekennzeichnet, dass**
    mit dem Verfahren mikrostrukturelle Veränderungen in dem Substrat (4) und/oder der Schicht (7, 10) des Bauteils (1) untersucht werden,

die durch Veränderungen von Ausscheidungen im Material des Substrats (4) und/oder der zumindest einen Schicht (7, 10) bedingt sind.

9. Verfahren nach einem oder mehreren der Ansprüche 6 bis 8,
   **dadurch gekennzeichnet, dass**
   mit dem Verfahren mikrostrukturelle Veränderungen in dem Substrat (4) und /oder der Schicht (7, 10) des Bauteils (1) untersucht werden,
   die durch Risse im Substrat (4) und/oder der zumindest einen Schicht (7, 10) bedingt sind.

10. Verfahren nach einem oder mehreren der Ansprüche 6 bis 9,
    **dadurch gekennzeichnet,**
    **dass** das Substrat (4) und/oder die Schicht (7, 10) eine Legierung ist, und
    **dass** mit dem Verfahren mikrostrukturelle Veränderungen des Substrats (4) und/oder der Schicht (7, 10) untersucht werden,
    die durch Verarmung an zumindest einem Legierungselement bedingt sind.

11. Verfahren nach einem oder mehreren der Ansprüche 6 bis 10,
    **dadurch gekennzeichnet, dass**
    mit dem Verfahren mikrostrukturelle Veränderungen des Substrats (4) und/oder der zumindest einen Schicht (7, 10) untersucht werden,
    insbesondere einer porösen keramischen Schicht (10), die durch eine Versinterung des porösen Substrats (4) und/ oder der Schicht (7,10) bedingt sind.

12. Verfahren nach einem oder mehreren der Ansprüche 6 bis 11,
    **dadurch gekennzeichnet, dass**
    mit dem Verfahren des Substrats (4) und/oder der zumindest einen Schicht (7, 10) mikrostrukturelle Veränderungen untersucht werden,
    die durch eine Phasenveränderung des Materials des Substrats (4) und/oder der zumindest einen Schicht (7, 10) bedingt sind.

13. Verfahren nach Anspruch 1 bis 12,
    **dadurch gekennzeichnet, dass**
    die thermische Leitfähigkeit ($\lambda$) durch eine Laserflashmethode oder durch eine Thermowellenanalyse bestimmt wird.

14. Verfahren nach Anspruch 1 bis 13,
    **dadurch gekennzeichnet, dass**
    der Materialparameter des Substrats (4) bei vorhandener Schicht (7, 10) auf dem Substrat (4) bestimmt wird.

15. Verfahren nach Anspruch 1 bis 13,
    **dadurch gekennzeichnet, dass**
    ein Materialparameter des Substrats (4) und der Schicht (7, 10) zusammen bestimmt wird.

16. Verfahren nach Anspruch 1, 6, 7 oder 10,
    **dadurch gekennzeichnet, dass**
    das Verfahren mit einem Substrat (4) aus einer eisen-, kobalt- oder nickel-basierten Superlegierung durchgeführt wird.

17. Verfahren nach Anspruch 1, 6, 7 10 oder 12
    **dadurch gekennzeichnet, dass**
    das Verfahren mit einem Schichtsystem (1) durchgeführt wird, wobei die Schicht (7) die Zusammensetzung MCrAlX-Schicht aufweist,
    wobei M für zumindest eine Element der Gruppe Eisen, Kobalt oder Nickel steht,
    sowie X für Yttrium, Silizium und/oder zumindest ein Element der Seltenen Erden.

18. Verfahren nach Anspruch 1,
    **dadurch gekennzeichnet, dass**
    das Verfahren mit einem Bauteil (1) einer Gas- (100) oder Dampfturbine (300, 303),
    insbesondere einer Turbinenschaufel (120, 130, 354, 357) oder einer Auskleidung einer Brennkammer (110) durchgeführt wird.

**19.** Verfahren nach Anspruch 1,
**dadurch gekennzeichnet, dass**
die Messung der Materialparameter online erfolgt.

**20.** Verfahren nach Anspruch 1 oder 2,
**dadurch gekennzeichnet, dass**
ab einer bestimmten prozentualen Veränderung des Materialparameters ein Zeitpunkt festgelegt wird,
ab dem das Bauteil (1) überprüft, wieder aufgearbeitet werden oder komplett ausgetauscht werden muss.

**21.** Verfahren nach Anspruch 1 oder 18,
**dadurch gekennzeichnet, dass**
dass das Bauteil (1, 120, 130) ein Bauteil einer Vorrichtung (100, 300, 303) ist, und
dass der Materialparameter gemessen wird während das Bauteil (1, 120, 130) in der Vorrichtung (100, 300, 303) eingebaut ist.

**Claims**

**1.** Method for detecting microstructural modifications of a component (1), in particular a layer system, by repeatedly measuring at least one material parameter of the component (1), wherein a measurement method is used for determining a material parameter selected from the group electrical capacitance, thermal conductivity, specific heat capacity, Peltier coefficient, magnetic susceptibility, ferroelectricity, pyroelectricity, ultrasound or mechanical indenter test.

**2.** Method according to Claim 1, **characterized in that** the first measurement of the at least one material parameter is carried out on a newly produced component (1).

**3.** Method according to Claim 1 or 2, **characterized in that** the first measurement is carried out before first operational use of the component.

**4.** Method according to Claim 1, 2 or 3, **characterized in that** the at least one second measurement is performed at a time interval from the first measurement after or during first operational use.

**5.** Method according to Claim 1, 2, 3 or 4, **characterized in that** the method involves a nondestructive measurement method.

**6.** Method according to Claim 1, **characterized in that** the method is carried out with a layer system (1) which consists of a substrate (4) and at least one layer (7, 10).

**7.** Method according to Claim 1 or 6, **characterized in that** the method is carried out with a layer system (1) which consists of a substrate (4), at least one first layer (7) and an outer layer (10).

**8.** Method according to Claims 6 to 7, **characterized in that** microstructural modifications in the substrate (4) and/or the layer (7, 10) of the component (1), which are due to modifications of precipitates in the material of the substrate (4) and/or the at least one layer (7, 10), are studied by the method.

**9.** Method according to one or more of Claims 6 to 8, **characterized in that** microstructural modifications in the substrate (4) and/or the layer (7, 10) of the component (1), which are due to cracks in the substrate (4) and/or the at least one layer (7, 10), are studied by the method.

**10.** Method according to one or more of Claims 6 to 9, **characterized in that** the substrate (4) and/or the layer (7, 10) is an alloy, and
**in that** microstructural modifications of the substrate (4) and/or the layer (7, 10), which are due to depletion of at least one alloy element, are studied by the method.

**11.** Method according to one or more of Claims 6 to 10, **characterized in that** microstructural modifications of the substrate (4) and/or the layer (7, 10), in particular a porous ceramic layer (10), which are due to sintering of the porous substrate (4) and/or the layer (7, 10), are studied by the method.

12. Method according to one or more of Claims 6 to 11, **characterized in that** microstructural modifications of the substrate (4) and/or the layer (7, 10), in particular a porous ceramic layer (10), which are due to a phase change of the material of substrate (4) and/or the at least one layer (7, 10), are studied by the method.

13. Method according to Claims 1 to 12, **characterized in that** the thermal conductivity ($\lambda$) is determined by a laser flash method or by thermal wave analysis.

14. Method according to Claims 1 to 13, **characterized in that** the material parameter of the substrate (4) is determined with the layer (7, 10) present on the substrate (4).

15. Method according to Claims 1 to 13, **characterized in that** a material parameter of the substrate (4) and of the layer (7, 10) is determined.

16. Method according to Claim 1, 6, 7 or 10, **characterized in that** the method is carried out with a substrate (4) made of an iron-, cobalt- or nickel-based superalloy.

17. Method according to Claim 1, 6, 7, 10 or 12, **characterized in that** the method is carried out with a layer system (1), the layer (7) having the composition MCrAlX layer, where M stands for at least one element of the group iron, cobalt or nickel,
and X stencil yttrium, silicon and/or at least one rare-earth element.

18. Method according to Claim 1, **characterized in that** the method is carried out with a component (1) of a gas turbine (100) or steam turbine (300, 303), in particular a turbine blade (120, 130, 354, 357) or a lining of the combustion chamber (110).

19. Method according to Claim 1, **characterized in that** the measurement of the material parameter is performed online.

20. Method according to Claim 1 or 2, **characterized in that** above a certain percentage modification of the material parameter, a time is determined after which the component (1) must be tested, refurbished or completely replaced.

21. Method according to Claim 1 or 18, **characterized in that** the component (1, 120, 130) is a component of a device (100, 300, 303), and
**in that** the material parameter is measured while the component (1, 120, 130) is installed in the device (100, 300, 303).

**Revendications**

1. Procédé de détection de modifications microstructurelles d'un composant (1)
notamment d'un système (1) stratifié,
en mesurant au moins deux fois, notamment plusieurs fois, au moins un paramètre de matériau de l'élément (1),
dans lequel on utilise un procédé de mesure pour la détermination d'un paramètre de matériau choisi dans le groupe de la capacité électrique, de la conductibilité thermique, de la capacité calorifique spécifique, du coefficient Peltier, de la susceptibilité magnétique, de la ferroélectricité, de la pyroélectricité, de l'ultrason ou d'un test d'empreinte mécanique.

2. Procédé suivant la revendication 1,
**caractérisé**
**en ce que** l'on effectue la première mesure du au moins un paramètre de matériau sur un élément (1), nouvellement fabriqué.

3. Procédé suivant la revendication 1 ou 2,
**caractérisé**
**en ce que** l'on effectue la première mesure avant la première mise en fonctionnement de l'élément.

4. Procédé suivant la revendication 1, 2 ou 3,

**caractérisé**

**en ce que** l'on effectue la au moins deuxième mesure à distance dans le temps de la première mesure après ou pendant la première mise en fonctionnement.

5. Procédé suivant la revendication 1, 2, 3 ou 4,
   **caractérisé**
   **en ce que** le procédé comporte un procédé de mesure sans destruction.

6. Procédé suivant la revendication 1,
   **caractérisé**
   **en ce que** l'on effectue le procédé avec un système (1) stratifié,
   qui est constitué d'un substrat (4) et d'au moins une couche (7, 10).

7. Procédé suivant la revendication 1 ou 6,
   **caractérisé**
   **en ce que** l'on effectue le procédé avec un système (1) stratifié,
   qui est constitué d'un substrat (4), d'au moins une première couche (7) et d'une couche (10) extérieure.

8. Procédé suivant la revendication 6 à 7,
   **caractérisé**
   **en ce que** l'on étudie par le procédé des modifications microstructurelles dans le substrat (4) et/ou dans la couche (7, 10) de l'élément (1)
   qui sont provoquées par des modifications de dépôts dans le matériau du substrat (4) et/ou de la au moins une couche (7, 10).

9. Procédé suivant l'une ou plusieurs des revendications 6 à 8,
   **caractérisé**
   **en ce que** l'on étudie par le procédé des modifications microstructurelles dans le substrat (4) et/ou la couche (7, 10) de l'élément (1),
   qui sont dues à des fissures dans le substrat (4) et/ou dans la au moins une couche (7, 10).

10. Procédé suivant l'une ou plusieurs des revendications 6 à 9,
    **caractérisé**
    **en ce que** le substrat (4) et/ou la couche (7, 10) est un alliage, et
    **en ce que** l'on étudie par le procédé des modifications microstructurelles du substrat (4) et/ou de la couche (7, 10),
    qui sont provoquées par un appauvrissement en au moins un élément d'alliage.

11. Procédé suivant l'une ou plusieurs des revendications 6 à 10,
    **caractérisé**
    **en ce que** par le procédé on étudie des modifications microstructurelles du substrat (4) et/ou de la au moins une couche (7, 10),
    notamment d'une couche (10) céramique poreuse,
    qui sont provoquées par un frittage du substrat (4) et/ou de la couche (7, 10) poreuse.

12. Procédé suivant l'une ou plusieurs des revendications 7 à 11,
    **caractérisé**
    **en ce que** par le procédé on étudie des modifications microstructurelles du substrat (4) et/ou de la au moins une couche (7, 10),
    qui sont provoquées par une modification de phase du matériau du substrat (4) et/ou de la au moins une couche (7, 10).

13. Procédé suivant l'une des revendications 1 à 12,
    **caractérisé**
    **en ce que** l'on détermine la conductibilité ($\lambda$) thermique par un procédé flash au laser ou par une analyse d'ondes thermiques.

14. Procédé suivant l'une des revendications 1 à 13,
    **caractérisé**

**en ce que** l'on détermine la paramètre de matériau du substrat (4) alors que la couche (7, 10) est présente sur le substrat (4).

15. Procédé suivant la revendication 1 à 13,
    **caractérisé**
    **en ce que** l'on détermine ensemble un paramètre de matériau du substrat (4) et de la couche (7, 10).

16. Procédé suivant la revendication 1, 6, 7 ou 10,
    **caractérisé**
    **en ce que** l'on effectue le procédé avec un substrat (4) en un super alliage à base de fer, de cobalt ou de nickel.

17. Procédé suivant la revendication 1, 6, 7, 10 ou 12,
    **caractérisé**
    **en ce que** l'on effectue le procédé avec un système (1) stratifié, la couche (7) ayant la composition de couche MCrAlX,
    M représentant au moins un élément du groupe du fer, du cobalt ou du nickel,
    tandis que X représente l'yttrium, le silicium et/ou au moins un élément de terre rare.

18. Procédé suivant la revendication 1,
    **caractérisé**
    **en ce que** l'on effectue le procédé avec un élément d'une turbine à gaz (100) ou à vapeur (300, 303),
    notamment une aube (120, 130, 354, 357) de turbine ou un revêtement d'une chambre de combustion (110).

19. Procédé suivant la revendication 1,
    **caractérisé**
    **en ce que** l'on effectue la mesure du paramètre de matériau en ligne.

20. Procédé suivant la revendication 1 ou 2,
    **caractérisé**
    **en ce que** l'on détermine à partir d'une certaine modification en % du paramètre du matériau un instant à partir duquel l'élément (1) contrôlé doit être retraité ou remplacé complètement.

21. Procédé suivant la revendication 1 ou 18,
    **caractérisé**
    **en ce que** l'élément (1, 120, 130) est un élément d'un dispositif (100, 300, 303) et
    **en ce que** l'on mesure le paramètre de matériau pendant que l'élément (1, 120, 130) est monté dans le dispositif (100, 300, 303).

FIG 1

FIG 2

FIG 3

FIG 4

FIG 5

FIG 6

FIG 7

7

1

4

FIG 8

I

U

7, 10

4

1

FIG 9

E

11

10

7

4

1

D

## FIG 10

## FIG 11

FIG 12

FIG 13

## FIG 14

## FIG 15

## FIG 16

FIG 17

EP 1 716 402 B1

FIG 18

## FIG 19

FIG 20

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- US 6200088 B
- US 6455173 B
- US 6544665 B
- US 6553318 B2
- US 6577141 B2
- US 6512379 B2
- US 4408294 A
- EP 0773359 A1
- WO 02079774 A2
- US 5552711 A
- US 5588034 A

- DE 2442639 A
- US 6517236 B2
- US 6512379 B
- EP 1204776 A
- EP 1306454 A
- EP 1319729 A
- WO 9967435 A
- WO 0044949 A
- US 6024792 A
- EP 0892090 A1